# EUROPEAN PATENT APPLICATION

(11) **EP 4 538 335 A2**
(43) Date of publication of application: **16.04.2025**
(21) Application number: 25159379.4
(22) Date of filing: 25.01.2023
(51) Int. Cl.: C09D 7/40

(54) **SYSTEM FOR BATHING BEDRIDDEN PATIENTS**

(30) Priority: 04.03.2022 PT 2022117836
(62) Divisional of application: 23706843.2
(71) Applicant: IHCare - Innovation Hospital Care, Lda, 3230-343 Penela (PT)
(72) Inventor: SANTOS PIRES, Diana Filipa, 3040-35 Coimbra (PT); FELINO CARVALHÃO, David Abreu, 3080-250 Figueira da Foz (PT)
(74) Representative: Couto, Cláudia

(57) **Abstract**

The present application describes a system developed to enable the bathing of a lying user in a bed. The system comprises a set of devices and accessories adapted and configured to allow, in a safe and comfortable way, such a bath by the bedridden user, ensuring compliance with all the antibacterial and antiviral safety standards. The system is comprised of docking station, a mobile unit with an antimicrobial coating composition and a cover installed over a bed on which a patient is laying.

## Description

### Technical Field

The present application describes a system developed to enable the bathing of a user lying in a bed.

### Background art

Document WO2018126347A1 describes a bathing and nursing bed, comprising a nursing bed (10) and a bathing bed (20) provided on the nursing bed (10). The nursing bed (10) is provided with a discharge opening (13); the bathing bed (20) comprises a thin-layer inflatable space (23) consisting of a bottom layer (22) and a surface layer (21), and a loop layer (24) surrounding the periphery of the thin-layer inflatable space (23); when the bathing bed (20) is not inflated, the bathing bed can be easily laid on the nursing bed (10), and when the bathing bed is inflated, the loop layer (24) swells up to form an enclosing wall body, and is higher than the thin-layer inflatable space (23) so as to form a bath tub; moreover, a headrest body (25), a lumbar pad body (26), and a leg pad body (27) on the surface layer (21) also swell up and raise a patient, thereby facilitating a nursing staff in cleaning the body of the patient; bathwater automatically flows towards an outfall (211), and then is collected and guided into the discharge opening (13) to flow to a water collection trough (14). Whereby, the present invention can directly and quickly help a patient to take a hot bath on the nursing bed (10) and is easy to use and humanized.

Document CN106344304A describes a nursing bed having bathing and urine and feces cleaning functions and used for bedridden patients. A bathing device, a turning over device, an excreting device and a sewage tank are arranged on a bed body, wherein a bed surface adopts a fine-screen-shaped medical silica gel structure; the bathing device comprises a hair washing part and a foot washing part, the hair washing part comprises a head support plate embedded into the bed surface; the foot washing part comprises a foot basin cover plate and a foot basin, and the foot basin cover plate is embedded into the bed surface; the turning over device comprises a left turning over mechanism and a right turning over mechanism which adopt the same structure, and the left turning over mechanism and the right turning over mechanism implement turning over by tilting shoulder support plates, waist support plates and buttock support plates under driving of turning over hand wheels; the excreting device comprises an excreting bed pan cover plate and an excreting bed pan, and the excreting bed pan cover plate is embedded into the bed surface. The nursing bed integrates toilet functions, the problem that the various conventional nursing beds are inconvenient to use and have single function is solved, the happiness index of the patients can be increased to a greater extent, and the patients are full of confidence in living.

### Summary

The present invention describes a docking station, adapted to receive and couple a mobile unit to bathe bedridden patients, comprising at least one of a charging unit and a power unit to enable power supply to the mobile unit; and an admission microfilter connected to a faucet; characterized by further comprising an ultra-violet disinfection lamp, positioned between the admission microfilter and a heating unit, controlled by a control unit, to sterilize filtered water provided by the admission microfilter before being transferred to the mobile unit.

In one embodiment of the invention, the docking station comprises disinfectant reservoir, a shower gel reservoir and an output microfilter.

In another embodiment of the invention, the docking station comprises a water pressure connector configured to load a hot water reservoir comprised in the mobile unit with water provided by the heating unit; a water pressure connector configured to load a cold-water reservoir comprised in the mobile unit with sterilized water from the ultra-violet disinfection lamp; a disinfectant connector configured to load a disinfectant reservoir comprised in the mobile unit with disinfectant provided by a disinfectant reservoir; a shower gel connector configured to load a shower gel reservoir comprised in the mobile unit with shower gel provided by a shower gel reservoir; and a set of electrical connectors.

### General Description

The present application describes a system comprising a set of devices and accessories adapted and configured to enable bathing of a user lying in a bed.

Among the users of this system, it is possible to consider any healthy individuals, but it is mainly focused on patients whose clinical condition does not allow them to take a bath in a normal environment, i.e., in a standing position. The developed system allows, therefore, the bathing of bedridden patients, for example, in a hospital environment, without having to resort to large movements or transfers of the patient, which would cause great inconvenience to the patient, as well as potentiate the worsening of his clinical condition due to the exposure to hospital environment that may lead to additional infection.

From a global point of view, the system comprises a set of devices and accessories, whose combination and adaptation to the purpose aims to solve the problem related to bathing of bedridden patients in a safe and comfortable way.

Thus, the developed system comprises a mobile unit, a docking station, and a specialized cover.

One of the primary and fundamental components of this system is the bed cover. Its particular design, as well as its composition of elements and fibers specifically studied and adapted for the purpose of this solution, makes it possible to obtain a component with ample advantages when compared to other similar existing products. The proposed cover was designed to play a dual purpose, i.e., allow to fully replace the bed sheets functionality by a waterproof, totally hydrophobic, breathable, elastic, antibacterial and antiviral cover in one of the possible arrangements, and also to be arranged in a bathtub format just by correctly positioning existing anchoring points in the patient's bed. When laid out in the sheet position, its design allows it to fit correctly to the bed's mattress without wrinkling itself underneath it due to excess material, being also completely stretched out on the top surface of the mattress. As referred, in addition to the advantages mentioned with regard of replacing the bed sheets, the cover allows also the protection of the bed where the patient is laid in, nor only allowing to comfortably enjoy a bath in the exact same position where he is positioned, but also acting as a protecting cover in case of physiological carelessness occurs. Thanks to the structural characteristics of the cover, any fluid laying on its surface is easily removed using a cloth or absorbent compound, while ensuring all of its antiviral and antibacterial properties, thus guaranteeing a fully sterile environment. The developed cover model is not exclusively applicable to hospital beds, being perfectly and easily adjustable to any type of bed comprising a headboard and footboard, requiring only the dimensional adjustment of the cover, which is easily provided by its adjustable design. The bathtub layout features that this cover allows to achieve is due to the design and positioning of the anchoring points and seams particularly studied and developed that allow, by using only the upper and lower headboards of a standard articulated hospital bed, without resorting to the use of side rails, to form a waterproof enclosure for this purpose. The non-use of bed side rail protections is related to the fact that it improves the access of health professionals and/or assistants to the patient, thus minimizing the impact on mobility caused by the positioning of these grids, allowing a better approach to the patient during the bath application task. Between the headboard and footboard, a vertical fluid retention wall is provided, which includes an intermediate depression designed and developed to allow easy access to the users of the cover, particularly medical staff, thus enhancing the mobility of operations related to the process of bathing patients. The cover is composed by a two-layer component combination of a high-tech textile mesh and a breathable substrate. The mesh comprises a circular knit and is impregnated with a special formulated finish antibacterial containing with dispersing agents, allowing the formation of a very durable and uniform non migrating coating that has the ability to kill microorganisms on contact.

The cover also includes the installation of a drainage system for the bathing water, characterized by at least one drain valve positioned in a location that allows the effective drainage of dirty water resulting from the process, which may also be aided by a mechanism to regulate the inclination of the bed, thus making it more efficient and faster. The effectiveness of the performance of this drainage system can be enhanced while operating in beds with common state-of-the-art tilting mechanisms. The cover further includes a unique digital identifier that is later associated with the laying patient, which will allow its identification by the mobile unit, making it possible to determine the bath application's history of said patient and automatically adjust bath parameters to the condition of the patient. These unique digital identifiers may comprise one of an QR Code, barcode, RFID, NFC, among others.

In addition to the bed cover, and in order to enable bathing, the existence of the mobile unit is a fundamental part of this system. This mobile unit comprises a set of equipment and solutions for bathing, providing all of the necessary infrastructure to develop an in-bed bath, operationally controlled by an internal control system, which, through a locomotor system, promotes the movement between the points for bathing patients. In terms of functionality, the mobile unit is adapted to allow the remote application of a set of baths through a shower-type water dispenser, and the respective collection of the waters coming from said baths through the drainage system on the bed cover. Structurally, this unit holds inside it the transport of hot and cold clean water, an UV light water disinfection system, dirty water, shower gel, and disinfectant, and allows the configuration of the bath parameters to be applied to the patient, including the setting of the water temperature. These bathing parameters can be automatically associated with the unique digital identifier so that, when they are scanned, the mobile unit configures itself automatically without the need for operator and/or caregiver intervention. The purpose of using the disinfectant is to ensure the permanent and continuous disinfection of the mobile unit's dirty water tank, minimizing the appearance of bacterial ad/or viral outbreaks inside the machine. The internal design of the unit guarantees safety in case of system failure, guaranteeing that by the usage of valves and gravity that clean water is kept sterile at all moments. The water dispensing to the patient through the shower is done with a temperature between 36°C and 42°C and may incorporate in its composition a percentage of dissolved gel bath. In addition, all the water dispensed through the mobile unit, whether hot or cold, is not only filtered and sterilized using UV light at the time of its admission to the tanks of the mobile unit but is also subjected to the application of UV light by means of a lamp before its final application to the user to ensure its sterilization. The mobile unit also comprises a digital reader configured to guarantee the reading of the unique digital identifiers present on the cover.

Additionally, the mobile unit comprises a set of sensors that allow, through the direct application of wireless probes on the patient, to determine several vital parameters, analyzing the impact of the bath in its body and vital stability, that are communicated to the mobile unit. Among the various parameters internally analyzed in the mobile unit are data such as the time of application of the shower, the temperature of the water applied, and the identification of the patient to whom the shower is applied. Through the application of the wireless probes at least a collection of cardiac parameters, respiratory and body temperature data are acquired. The acquisition of vital parameters during the shower will make it possible to perform statistical analysis of the clinical condition of the patient and shower parameters, deriving which clinical outcomes are correlated with the shower temperature for the determination of optimal application conditions.

The mobile unit comprises an antibacterial and antiviral protection, provided through the application of a coating composition on its surface, which ensures compliance with these characteristics, preventing the spread of these agents in hospital environments, allowing the movement of the mobile unit between non-contiguous spaces and/or treatment units. This unit also incorporates a localization system using a three-dimensional Bluetooth technology that makes it possible to determine its exact location within a given space, making it possible later, and if necessary, to determine possible contagion patterns. This tracking technology can additionally be applied to patients and healthcare personnel as well, making it possible to determine who has been exposed to potential bacterial and/or viral contagion scenarios.

Additionally, and also incorporating the developed system, it is possible to find a docking station that is adapted for the coupling of the mobile unit, allowing the automatic performing of a number of appropriate tasks with no user intervention. This equipment is ideally located outside the patient's room and is mainly intended to load the mobile unit with hot clean water and cold clean water, reload the unit with shower gel, disinfectant, charge batteries, discharge the dirty water collected during the bathing process and provide an internal cleaning cycle of the machine. The clean water inlet, which includes a connection to the supply network, is composed of a filter to promote the filtration of the admitted clean water, which will then pass through a UV filter before being transferred to the mobile unit. The hot clean water circuit includes a heating unit to ensure the heating of this water to a temperature above 60°C to reduce potential microbial proliferation, which will be filtered again using a microfilter before being transmitted to the mobile unit.

The coupling of the mobile unit to the docking station, incorporates a set of automatic steps which comprise emptying the dirty water tank, applying a disinfection cycle with disinfectant material in said tank, emptying potentially present quantities to refill the hot and cold-water tanks.

### Brief description of the drawings

For better understanding of the present application, figures representing preferred embodiments are herein attached which, however, are not intended to limit the technique disclosed herein.

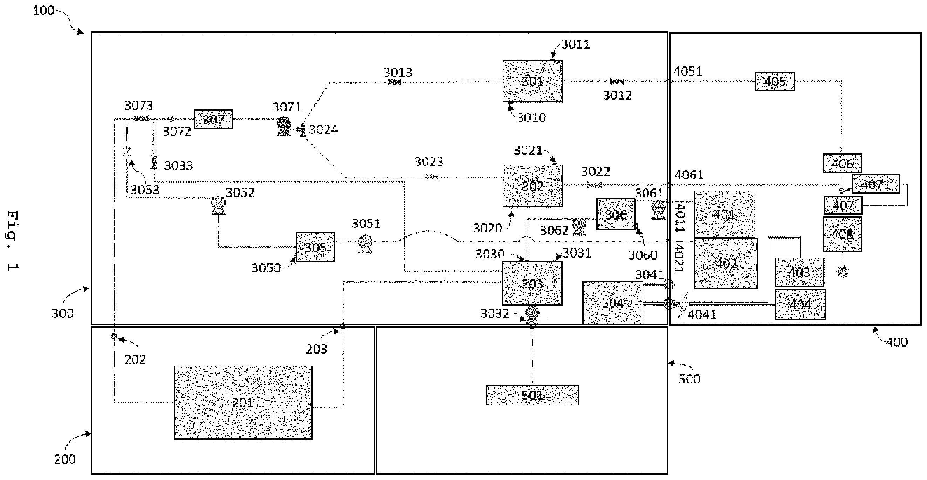

Fig. 1 - illustrates one of the possible embodiments for the proposed developed system (100) where the reference numbers relate to:
   100 - system;
   200 - bed;
   201 - bed cover;
   202 - water outlet / shower;
   203 - cover drainage valve;
   300 - mobile unit;
   301 - hot water reservoir;
   3010 - hot water reservoir temperature sensor;
   3011 - hot water reservoir level sensor;
   3012 - hot water reservoir admission electromagnetic valve;
   3013 - hot water reservoir outlet electromagnetic valve;
   302 - cold water reservoir;
   3020 - cold water reservoir temperature sensor;
   3021 - cold water reservoir level sensor;
   3022 - cold water reservoir admission electromagnetic valve;
   3023 - cold water reservoir outlet electromagnetic valve;
   3024 - 3-way valve electromagnetic mixer ;
   303 - dirty water reservoir;
   3030 - dirty water reservoir disinfectant sprinkler;
   3031 - dirty water reservoir level sensor;
   3032 - dirty water reservoir sewage grinder pump;
   3033 - electromagnetic valve (admission);
   304 - control unit;
   3041 - control unit electromagnetic lock;
   305 - shower gel reservoir;
   3050 - shower gel reservoir level sensor;
   3051 - shower gel reservoir admission pump;
   3052 - shower gel reservoir outlet pump;
   3053 - one-way valve;
   306 - disinfectant reservoir;
   3060 - disinfectant reservoir level sensor;
   3061 - disinfectant reservoir admission pump;
   3062 - disinfectant reservoir outlet pump;
   307 - ultra-violet disinfection lamp;
   3071 - shower water pressure pump;
   3072 - shower water temperature sensor;
   3073 - shower water electromagnetic valve;
   400 - docking station;
   401 - disinfectant reservoir;
   4011 - disinfectant connector;
   402 - shower gel reservoir;
   4021 - shower gel connector;
   403 - charging unit;
   404 - power unit;
   4041 - electrical connectors;
   405 - output microfilter;
   4051 - water pressure connector;
   406 - heating unit;
   4061 - water pressure connector;
   407 - ultra-violet disinfection lamp;
   4071 - ultra-violet control unit;
   408 - input/admission microfilter;
   500 - drainage system;
   501 - sewage.

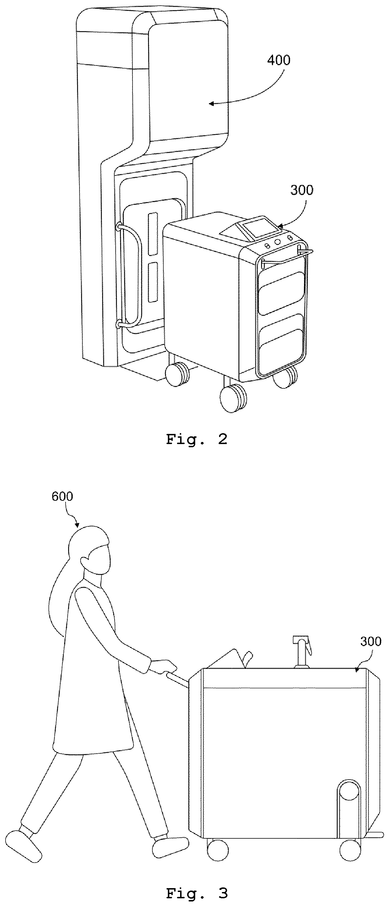

Fig. 2 - illustrates a graphical representation of the combination between the mobile unit and the docking station, where the reference numbers refer to:
   300 - mobile unit;
   400 - docking station.
Fig. 3 - illustrates a graphical representation of the mobile unit being transported through medical staff or an operator towards the patient, where the reference numbers refer to:
   300 - mobile unit;
   600 - operator.
Fig. 4 - illustrates a graphical representation of a possible arrangement of the mobile unit near bed where the patient is laid in, where the reference numbers refer to:
   200 - bed;
   201 - bed cover;
   300 - mobile unit;
   600 - operator;
   700 - patient.
Fig. 5 - illustrates a graphical representation of a possible arrangement of the mobile unit in use, providing bathing support for the laid patient, where the reference numbers refer to:
   200 - bed;
   201 - bed cover;
   202 - water outlet / shower;
   203 - cover drainage valve;
   300 - mobile unit;
   600 - operator;
   700 - patient.
Fig. 6 - illustrates a 2D graphical representation of the proposed bed cover, where the reference numbers refer to:
   201 - bed cover;
   203 - cover drainage valve;
   205 - central part of the bed cover;
   206 - side wing of the bed cover;
   207 - upper/lower wing of the bed cover;
   210 - triangular-shaped pieces;
   211 - central merging point
   212 - connection point.
Fig. 7 - illustrates a 3D graphical representation of the proposed bed cover, where the reference numbers refer to:
   200 - bed;
   201 - bed cover;
   203 - cover drainage valve;
   205 - central part of the bed cover;
   206 - side wing of the bed cover;
   207 - upper/lower wing of the bed cover;
   212 - connection point;
   213 - adjusting elements.
Fig. 8 - illustrates a 3D graphical representation of the proposed bed cover, and the shape that it will present when applied in a bed structure with headboard and footboard, where the reference numbers refer to:
   200 - bed;
   201 - bed cover;
   203 - cover drainage valve;
   205 - central part of the bed cover;
   206 - side wing of the bed cover;
   207 - upper/lower wing of the bed cover;
   212 - connection point;
   213 - adjusting elements.

### Description of Embodiments

With reference to the figures, some embodiments are now described in more detail, which are however not intended to limit the scope of the present application.

A particular embodiment of the system (100) disclosed herein is intended for the enable the bathing of a lying user or patient (700) in a bed (200). This task is achievable thanks to the use of a mobile unit (300) specially developed for this purpose, which incorporates a set of equipment that allows the patient (700) to bathe safely and comfortably laying on the bed (200). Combined with the use of the mobile unit (300), this task is only achievable thanks to the use of a hydrophobic bed cover (201), duly and simultaneously adaptable to both the bed mattress structure and the surrounding bed (200) structure.

In one of the proposed embodiments of the invention, the overall system (100) is composed of a mobile unit (300), a bed cover (201), and a docking station (400); all of which are able to work independently from each other.

As illustrated in Figure 1, the mobile unit (300) comprises a hot water reservoir (301), a cold-water reservoir (302), a dirty water reservoir (303), a control unit (304), a shower gel reservoir (305), a disinfectant reservoir (306) and an ultra-violet disinfection lamp (307). The control unit (304) is configured to provide to the lying patient (700) on a bed involved with the bed cover (201) a safe shower bath, through water outlet (202), based on a combination of elements comprising hot water, cold water, gel and disinfectant, this water blend being additionally disinfected before being applied to the patient through exposure to the UV light. The mobile unit (300), in particular the reservoirs and the control unit, are loaded by the docking station (400) when the unit (300) is therein attached. The docking station (400) comprises a disinfectant reservoir (401), a shower gel reservoir (402), a charging unit (403), a power unit (404), an output microfilter (405), a heating unit (406), an ultra-violet disinfection lamp (407) and an admission microfilter (408). The admission microfilter (408) is connected to a faucet. The hot water reservoir (301) is loaded with hot water provided by the heating unit (406); this connection between both mobile unit (300) and docking station (400) being ensured through a water pressure connector (4051) and an admission electromagnetic valve (3012) that controls the water intake admission. An output microfilter (405) enclosed between the water pressure connector (4051) and the heating unit (406) of the docking station (400). The cold-water reservoir (302) is loaded with cold water provided by the faucet, said water being filtered through a set of admission microfilter (408) and a disinfection lamp (407) controlled by a control unit (4071) ; this connection between both mobile unit (300) and docking station (400) being ensured through a water pressure connector (4061). The heating unit (406) is also supplied by the water filtered through the set of admission microfilter (408) and a disinfection lamp (407). The disinfectant reservoir (306) is loaded by the disinfectant reservoir (401) comprised in the docking station (401) by means of a connector (4011), and further supported by an admission pump (3061). The disinfectant reservoir (306) of the mobile unit (300) also comprises a level sensor (3060) to alert to the need of refill of the unit. The control unit (304) of the mobile unit (300) comprises an electromagnetic lock (3041) configured to ensure the coupling with the docking station (400), promoting also the power supply admission by the charging unit (403) and the power unit (404) through a set of electrical connectors (4041). The shower gel reservoir (305) of the mobile unit (300) is loaded by the shower gel reservoir (402) of the docking station (400) by means of a connector (4021) and an admission pump (3051) that ensures its filling rate. The gel reservoir (305) comprises a level sensor (3050) to alert to the need of refill of the unit. The dirty water reservoir (303) of the mobile unit (300) comprises a set of admission entries which include a disinfectant admission entry and a dirty water admission entry, said dirty water coming from a drainage valve (203) comprised in the cover (201). The disinfectant is applied over the dirty water contained within the reservoir (303) through a disinfectant sprinkler (3030). The reservoir (303) also comprises a level sensor (3031) in order to alert the mobile unit (300) user of the need of emptying it through an outlet included therein. This emptying procedure of the reservoir (303) is performed resorting to a drainage system (500), located in a remote independent location or comprised within the docking station (400), which in turn connects to an existing sewage system (501). The dirty water transfer between the reservoir (300) and said drainage system (500) is assisted by a sewage grinder pump (3032) that interconnects both elements.

The water outlet (202) will provide an adequate water blend to the patient (700) lying on the bed (200) comprising the bed cover (201). This water blend, in terms of temperature, it is controlled by mixing cold water from the reservoir (302) with hot water from reservoir (301). Both water sources are combined through a 3-way valve electromagnetic mixer (3024), whose inlet is controlled by a hot water reservoir outlet electromagnetic valve (3013) and a cold water reservoir outlet electromagnetic valve (3023). The water temperature is controlled through a temperature sensor (3072) located in the providing water circuit after an ultra-violet disinfection lamp (307) which is fed by a water pressure pump (3071) directly connected to the 3-way valve electromagnetic mixer (3024) outlet. Before being dispensed to the patient, the water blend will further comprise, if required, the addition of shower gel supplied from the reservoir (305). The shower gel supply circuit comprises a one-way valve (3053) connected to an outlet pump (3052) which is directly fed by said reservoir (305). The final water blend provided by the water outlet (202) is insured by both operating one-way valve (3053) and a shower water electromagnetic valve (3073).

Both the mobile unit (300), as well as the docking station (400), may comprise an arrangement of electronic state of the art components that allow the user of these devices to configure and operate all the functionalities inherent to its operations. Within these devices, it will be possible to consider controllers, actuators, electro-hydraulic elements, pumps, valves, keypads, push buttons, tactile screens, communication systems, energy storage systems, data processing systems, data storage systems, among others.

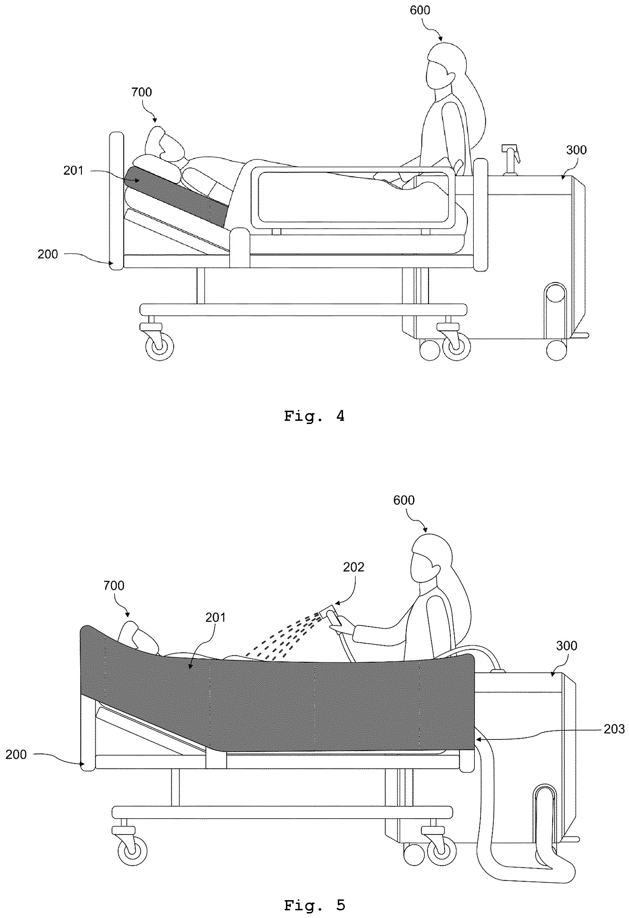

As is visually perceptible through the analysis of Figures 4, 5, 7 and 8, the cover (201) is adaptable to the external structure of the bed (200), and through physical recourse to the headboard and footboard of said bed (200), and the connection points properly developed and tailored for this purpose, the cover (201) allows to obtain a bathtub shape and functionality, with an hydrophobic textile composition. In order to further guarantee the sterility of the environment, the cover (201) textile also displays antibacterial and antiviral properties. Each side wing (206) of said structure (201), comprises a depression for easy access of the operator (600) to the patient (700), while ensuring that the bathing waters do not inadvertently come out to the outside of the tub.

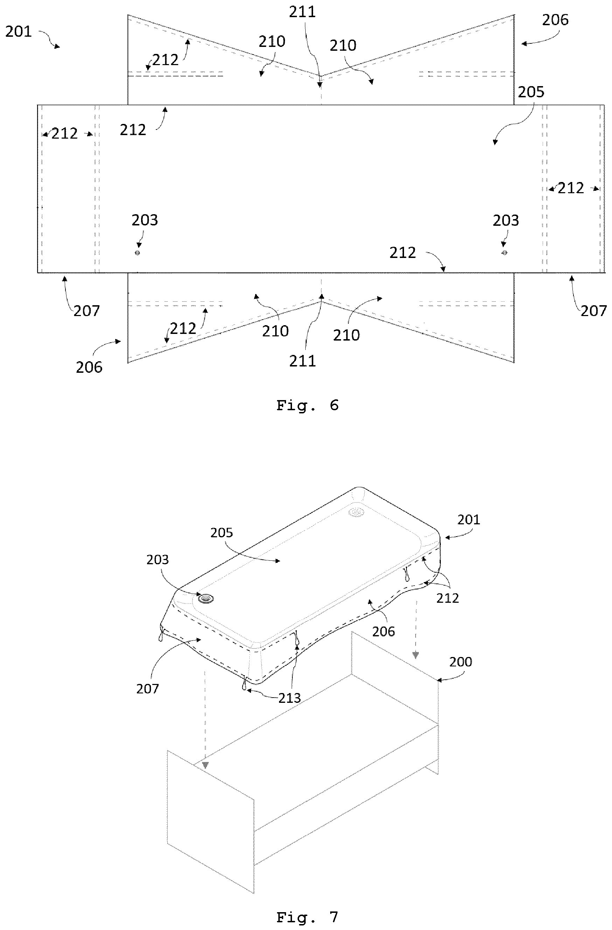

In figure 4, it is possible to understand that the bed cover (201) is correctly fitted to the bed mattress. In one of the proposed embodiments, the bed cover (201) comprises the use two stacked layers of a textile mesh and a breathable substrate, which grant the textile hydrophobic, antiviral and antibacterial characteristics. Yet in the depicted Figure 6, it is possible to verify the cover (201) as a particular arrangement and cutting format that allows to obtain the results and effects above described.

The cut shape of the bed cover (201) comprises on the central part (205), on which the patient (700) lies, a seamless, rectangular-shaped fabric arrangement. This shape ensures in dimensional terms, not only its applicability around a bed mattress, but also its applicability on the headboards and footboards of said bed (200), through the use of the existing upper/lower wings (207). On each side of the cover (201), in particular the longest side and in a central positioning (211), two pieces of hydrophobic fabric (210), of the same type of material as the rectangular/bed shaped fabric (205), cut in a right scalene triangle shape, are used. They are arranged in a mirrored manner, overlapping the hypotenuses of the aforementioned triangular-shaped pieces (210). These two merged triangular-shaped pieces (210) constitute side wing (206) of the bed cover (201). In addition to this overlap, the bottom of said triangular-shaped pieces, i.e., the bottom of the side wing (206) will be merged with the central part of fabric (205). In fact, all portions of the cover (201) are made of hydrophobic fabric, i.e., the central part of the bed cover (205), the side wings of the bed cover (206) and the upper/lower wings (207).

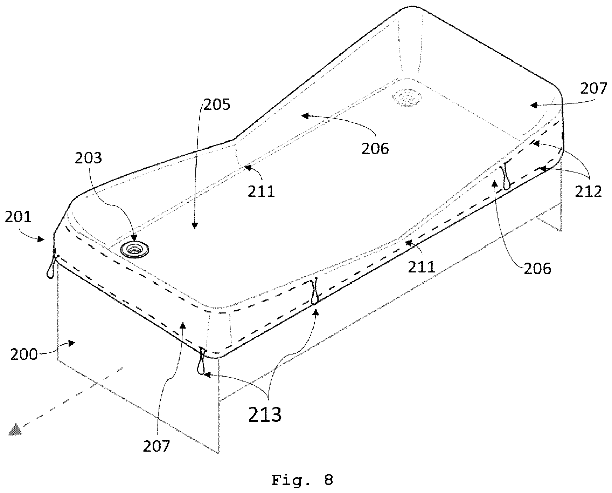

This double union of triangles on each side of the cover (201) that form the two side wings (206) enables the retention of liquids inside of the overall mounted structure of the cover (201), which is achieved through the clear and studied positioning of the connection points (212) illustrated in Figure 6, which simultaneously ensure the adaptability to the bed mattress, as well as to the support structure of the bed. It must be considered that this proposed embodiment of the cover (201) is only one of several possible ways to obtain the cover, showing that it can be dimensionally adapted to nearly any structure and bed format through tailor made adjustments, since ensured the existence of a pronounced headboard and footboard. The connection points (212) of the side wings (206) of the cover (201), which comprise the two triangular-shaped pieces (210), will be further connected with the top and bottom extremities of the central piece, i.e., with the upper and lower wings of the cover (201). Each of the triangular-shaped pieces (210) comprised on each of the side wings (206) of the bed cover (201) comprises a set of connection points (212) located on its longest edge, i.e., along the hypotenuse at a predetermined distance from the edge; at the point of union between the two triangles (210); and transversally along the base that joins it with the central part (205), also at a predetermined distance from it. The connection points (212) transversally located at the base of the triangular-shaped pieces (210) of opposed side wings (206) are connected together by an existing continuous connection both on the upper/lower wings (207) of the bed cover (201), as well as the existing connection points (212) along the hypotenuse of said triangles (210), which further merge together at the central merging point (211). As clearly identified in Figures 5 and 8, when fitted to the bed (200), the cover (201) supported by the headboard and footboard, will then comprise a bathtub shape with the side wings (206) recessed at a central point (211). Additionally, and to obtain the shape particularly illustrated in figure 8, the cover (201) comprises adjusting elements (213) positioned within the connection points (212) that promote the adaptation of the cover (201) to the shape and format of the various existing bed (200) types.

As also observed in Figures 6, 7 and 8, it is possible to identify the existence of at least one water drainage point, identified as a cover drainage valve (203), which ideally should be located at one end of the cover, in order to allow for its fruitful drainage.

In another aspect of the invention, it is described a coating composition with antimicrobial activity suitable to be applied in the mobile unit. This coating composition has antibacterial and antiviral properties and is suitable to provide protection against these pathogenic agents, preventing their spread in hospital environments, allowing the movement of the mobile unit between non-contiguous spaces and/or treatment units.

The coating composition comprises a water-based acrylic resin and at least one antimicrobial agent.

In one embodiment the water-based acrylic resin is copolymerized with styrene.

The choice of an aqueous-based resin does not compromise the fast-drying time and was shown to have an advantage when applied to a plastic substrate, compared to a solvent-based acrylic resin.

These antimicrobial agents are present in the coating composition in concentrations between 0.05 and 20% (w/w).

In one embodiment the antimicrobial agent is selected from metallic nanoparticles (NPs). In one embodiment the metallic nanoparticles are silver nanoparticles (AgNPs) with a diameter between 20 and 200 nm. In another embodiment the metallic nanoparticles are TiO₂ or CuO.

In one embodiment the coating composition comprises between 0.05 and 20% (w/w) of AgNPs or TiO₂ or CuO nanoparticles.

In another embodiment, the antimicrobial agent can also be selected from biguanides, such as chlorhexidine digluconate and Poly(hexamethylenebicyanoguanide-hexamethylenediamine) hydrochloride.

In one embodiment, the coating composition comprises between 80 and 99.95 % (w/w) of the water-based acrylic resin and between 0.05 and 20% (w/w) of at least one antimicrobial agent.

The pH of the water-based acrylic resin is not altered with the addition of the metallic nanoparticles, particularly with the addition of AgNPs. Thus, AgNPs and other NPs are an additive compatible with the water-based acrylic resin and can confer antimicrobial activity.

In one embodiment the coating composition has a pH between 7 and 9.

Microbiological data suggests that AgNPs have proven efficacy against Gram+, Gram- and fungi. To reinforce this activity and increase the range of microorganisms affected, a quaternary ammonium compound can be added to the coating composition.

Quaternary ammonium compounds are one of the most used compounds for disinfection and sterilization due to their broad spectrum of action. However, these compounds have the great disadvantage of being poorly biodegradable and very toxic to the aquatic environment. To overcome this drawback, more biodegradable quaternary ammonium compounds such as esterquats, have been developed. These are widely used in the cosmetics and detergent industries and are potential antimicrobial agents.

In one embodiment, optionally, the quaternary ammonium compound is further present in the coating composition in a concentration up to 20% (w/w).

In one embodiment, the esterquat compound can be further added to the coating composition between 1 and 1000 mg/L.

The coating composition was shown to adhere well to the surfaces of the mobile unit.

A coating composition comprising a water-based acrylic resin, metallic nanoparticles and an ammonium quaternary compound, due to its physico-chemical characteristics, is suitable for application in the system of the present invention, since it adheres well to the surface, is fast drying, and forms a water-resistant film.

Depending on the mode of application, it may be necessary to further add a rheological modifier to increase the viscosity of the coating composition. Rheological modifiers can be selected from water-soluble derivatives of cellulose such as hydroxyethyl cellulose or hydroxypropyl methylcellulose. Also, other water-soluble polymers as polyethylene glycol, polyacrylic acid and polyvinyl alcohol.

In one embodiment, the rheological modifiers are present in the coating composition between 0.1 and 5% (w/w).

## Claims

1. A docking station (400), adapted to receive and couple a mobile unit (300) to bathe bedridden patients, comprising
at least one of a charging unit (403) and a power unit (404) to enable power supply to the mobile unit (300); and
an admission microfilter (408) connected to a faucet; **characterized by** further comprising
an ultra-violet disinfection lamp (407), positioned between the admission microfilter (408) and a heating unit (406), controlled by a control unit (4071), to sterilize filtered water provided by the admission microfilter (408) before being transferred to the mobile unit (300).

2. Docking station (400), adapted for receiving and coupling the mobile unit (300) to bathe bedridden patients according to the previous claim, **characterized by** further comprising a disinfectant reservoir (401), a shower gel reservoir (402) and an output microfilter (405).

3. Docking station (400), adapted to receive and couple the mobile unit (300) to bathe bedridden patients according to any of the previous claims, **characterized by** further comprising
a water pressure connector (4051) configured to load a hot water reservoir (301) comprised in the mobile unit (300) with water provided by the heating unit (406);
a water pressure connector (4061) configured to load a cold-water reservoir (302) comprised in the mobile unit (300) with sterilized water from the ultra-violet disinfection lamp (407);
a disinfectant connector (4011) configured to load a disinfectant reservoir (306) comprised in the mobile unit (300) with disinfectant provided by a disinfectant reservoir (401);
a shower gel connector (4021) configured to load a shower gel reservoir (305) comprised in the mobile unit (300) with shower gel provided by a shower gel reservoir (402); and
a set of electrical connectors (4041).
